Europäisches Patentamt

(19) European Patent Office    (11) Publication number: **0 082 476**
**B1**
Office européen des brevets

(12)                    **EUROPEAN PATENT SPECIFICATION**

(45) Date of publication of patent specification: **05.11.86**    (51) Int. Cl.⁴: **B 65 G 43/02, G 01 N 27/04**

(21) Application number: **82111652.2**

(22) Date of filing: **15.12.82**

(54) Rip detecting antenna.

(30) Priority: **17.12.81 US 331709**
**17.12.81 US 331711**

(43) Date of publication of application:
**29.06.83 Bulletin 83/26**

(45) Publication of the grant of the patent:
**05.11.86 Bulletin 86/45**

(84) Designated Contracting States:
**DE FR GB IT SE**

(56) References cited:
**DD-A- 136 079**
**DE-A-2 018 986**
**DE-B-1 756 660**
**US-A-3 792 459**
**US-A-4 296 855**

**KUNSTSTOFFBERATER, no. 5, 1977, R. GILG**
**"Russ für leitfähige Kunststoffe", pages 262 -**
**265**

(73) Proprietor: **The B.F. GOODRICH Company**
**Dept. 0015 WHB-6 500 South Main Street**
**Akron, Ohio 44318 (US)**

(72) Inventor: **Jacobs, Howard Larkin**
**8042 Broadview Road**
**Broadview Heights Ohio 44147 (US)**
Inventor: **Houck, Robert James**
**443 Crystal Street**
**Akron Ohio 44305 (US)**
Inventor: **Klein, Richard Grant**
**555 Jackson Street**
**Amherst Ohio 44001 (US)**

(74) Representative: **von Kreisler, Alek, Dipl.-Chem.**
**et al**
**Deichmannhaus am Hauptbahnhof**
**D-5000 Köln 1 (DE)**

## Description

### Background of the Invention

In long endless conveyor belts of the type having an electrically insulating body used to convey bulk material, there is a possibility of encountering a rip in the belt. This may occur, for example by sharp objects being dropped thereon at a loading station. It is desirable to promptly detect such longitudinal rips and, preferably, shut down and repair the conveyor belt upon such detection, thereby minimizing damage to the belt.

In prior art structures as described, for example, in U.S. Patent No. 3,792,459 issued to Frank D. Snyder, there is disclosed a conveyor belt rip detecting system of the type in which the instant invention may be employed. In such a rip detection system, a plurality of spaced antennas are imbedded transversely at spaced-apart locations in the belt so as to periodically couple an electrical signal from a transmitter probe to a receiver probe while the belt, with its respective antennas, moves past the electrical sensor probes. The detected electrical signals may thus function to monitor the performance of the belt and shut down the system in response to a break in an antenna which would be indicative of a longitudinal rip in the belt. Detection of the break will permit correction before the break or rip gets too long and destroys an extended portion or even the entirety of the belt or before the belt assembly ceases to function properly. A rip, noted timely, can be corrected with minimum cost and inconvenience.

In the prior art devices it has been the general practice to utilize antennas made of metallic screens or wires such as steel extending transversely across the width of the belt, at spaced apart distances. Such wires function properly during normal operations for a period of time. Unfortunately, however, due to movement of the belt and wires around the conveyor rollers of the system, continued flexing stresses upon the wires of the antenna may cause premature breakage of the wires, thus causing a malfunction in the rip detection system. Metallic wires are also susceptible to breakage caused by ore dropped on the belt at a loading station. A broken antenna, caused by failure of any nature, will undesirably give the appearance to the control system that there is a rip in the belt. The system could then improperly shut down the conveying system when in fact there is no such rip in the belt. Alternate programming of the control system may also be employed.

US—A—296 855 relates to an electrically conductive fabric sheet adapted for use as a controlling antenna. It includes filler and warp yarns of an electrically insulating material suffused with electrically conducting carbon particles.

Also in the prior art, as described in U.S. Patent No. 4,296,855 issued to Gary L. Blalock, is an alternate form of antenna according to the preamble of claim 1. Such antenna is constructed of a woven, carbon suffused nylon. Such antennas perform satisfactorily, with mechanical properties superior to the metallic screen antennas.

"Kunststoffberater" 5/1977, page 262 to page 265 describes the use of special carbon black to provide rubber with enhanced conductivity.

DD—A—136 079 relates to a terminal means used in an electric circuit containing carbon black effecting the conductivity.

### Summary of the Invention

The present invention relates to a system for detecting a rip in a conveyor belt moveable through a closed path of travel, the conveyor belt including at least one sensor probe means positioned along the path of travel, and the conveyor belt having at least one electrically conductive antenna positioned within the belt for carrying signals across the belt in a direction perpendicular to the direction of belt travel during normal operating conditions and for ceasing the carrying of signals across the belt when the belt and antenna are torn, the antenna principally comprising substantially unreinforced rubber and electrically conductive particles of carbon black between more than 10% and less than 25% by weight, the antenna being vulcanized into the conveyor belt.

In accordance with the embodiment of the instant invention, each antenna is constructed principally of natural and synthetic rubber, blended with a significant part of electrically conductive carbon black. The remaining minority of components consists of wear resisting agents, antioxidants, vulcanization promoters and other additives to extend the life of the antennas and improve their mechanical, chemical and electrical properties. When vulcanized into a conveyor belt at spaced apart points along the belt length, such rubber members can function as antennas for rip detection purposes. A rip detecting system provided with a belt having conductive rubber antennas does not suffer from premature breakage of the antennas since conductive rubber antennas can elongate more than prior art antennas without loosing their electrically conductive properties. This assures impact resistance of belts in which they are employed. Premature antenna breakage of antennas would cause the loss of electrical conductivity across the belt and between the probes in a control system of the type disclosed in the aforementioned patent to Synder. The new antennas are also cheaper than prior art devices and easier to fabricate into belt systems. Being vulcanized into the belt, they exhibit better mechanical integrity in the belt since they are part of the belt composite, effectively being bonded as one with the belt.

In order to gain a better understanding of the invention as well as other advantages and further features thereof, reference is made to the following detailed description of the invention to be read in conjunction with the accompanying drawings forming part of this application.

Brief Description of the Drawings

Figure 1 is a schematic side elevational view of a conveyor assembly and control system adapted to utilize antennas constructed in accordance with the instant invention;

Figure 2 is a schematic sectional view of the assembly of Figure 1 taken through the belt, antenna, sensor probes, and control circuitry;

Figure 3 is a perspective view of the belt of Figures 1 and 2 with layers removed to show internal constructions, including the antenna; and

Figure 4 is a sectional view of an alternate belt assembly employing the embodiment antennas of the instant invention.

Description of the Preferred Embodiment

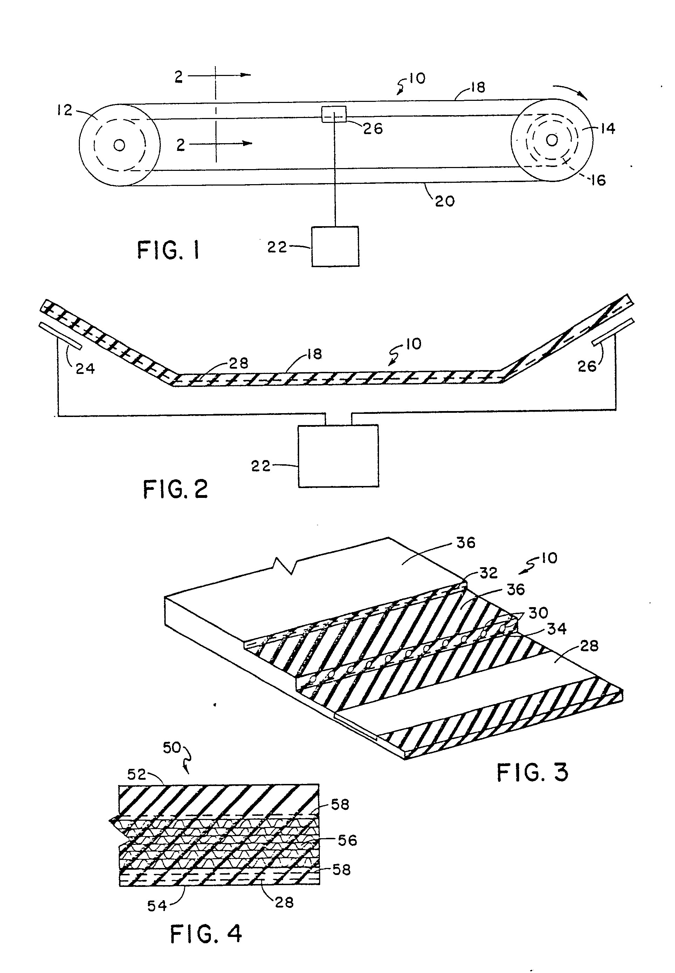

As shown in the figures, with particular reference to Figure 1, there is shown a conveyor belt assembly constructed to utilize the antenna made in accordance with the instant invention. The conveyor belt, generally designated as 10, is trained around a plurality of rollers 12 and 14 powered by a drive source, as motor 16, to move the belt in a continuous cycle of operation. The belt has an upper zone or track 18 for conveying ore or other material between a loading station and a discharge station. Opposite the upper zone is a belt return zone 20. The edges of the belt are preferably turned up slightly at their edges at least along the upper surface to minimize spillage of conveyed ore therefrom. The belt is schematically shown as traveling over a short distance between two rollers. It should be understood that belts of this type are readily adapted for conveying ore over great distances including many hundreds or thousands of yards. Further, only two rollers, 12 and 14 are shown for illustrative purposes. Many roller configurations could be suitably utilized to permit conveying of materials great distances, up extended heights and even around corners.

Utilized in conjunction with the conveyor belt 10 and drive source 16 is a control mechanism or assembly 22 including electrical sensors or probes 24 and 26 fixedly positioned adjacent the lower surface of the upper track 18 of the belt. Other probe locations to transmit and receive signals may be utilized. The probes are located adjacent opposite edges of the belt and are adapted to monitor its movement and feed electrical signals to the control mechanism 22. This turn is adapted to act in a servo-loop configuration, through appropriate circuitry, back to motor 16. In this manner, the motive force to the belt may be terminated in response to a rip in any antenna 28 which is fixedly mounted within the belt for movement therewith.

In the preferred mode, a plurality of antennas are adapted to be located at fixed, spaced intervals within the belt. These antennas could be spaced at fifty or one hundred feet, or more or less, but generally as a function of the belt size, speed, degree or rip detection protection desired and the control program utilized. The antennas are utilized to detect the presence of broken or unbroken belt segments moving past probes 24 and 26. A more complete understanding of the belt assembly and control system can be had by reference to the aforementioned patent to Snyder.

Shown in Figure 3 is the preferred belt construction including an antenna constructed in accordance with the instant invention. The preferred antenna is shown in a conveyor belt wherein it may be beneficially utilized. The belt 10, as shown particularly in Figure 3, may include steel cables 30 which prevent the belt from stretching in the direction of belt movement and which provide great strength to the belt. Reinforcement in both the length and width of the belt is provided by fabric sheets or breakers 32 and 34 on opposite sides of the centrally located cables 30. Various layers of vulcanized elastomeric material such as rubber 36, natural or synthetic combinations thereof blended for belting purposes, are located on opposite sides of the cables 30 and sheets 32 and 34. The cables, sheets and rubber all run in the continuous loop configuration for carrying out the conveying function.

An alternate belt construction employing the antenna of the instant invention is shown in Figure 4. The belt 50 has rubber upper and lower cover layers 52 and 54 on opposite faces. Rubberized fabric layers 56 are located between the cover layers with fabric sheets or breakers 58 located at the interfaces between the rubberized fabric layers and cover layers. The breakers are constructed of a fabric material and aid in bonding the carcass layers to the cover layers. They also add impact resistance to the belt. The antennas 28 are located within the cover layer 54. The breakers, covers, and fabric carcass extend continuously along the length of the endless belt. The antennas are spaced along the length of the belt and are adapted to function in the manner of the system described in the aforementioned Snyder patent in carrying electrical changes in the form of signals from the remitter probe 24 to the receiver probe 26 for rip detection purposes.

It should be understood, however, that the antennas of the instant invention can function in some embodiments equally well in any belt assembly with or without cables. Breaker plies are preferably utilized in a location between the antennas and steel cables, if steel cables are employed.

Located between the layers of rubber are segments of antenna 28 which function for the rip detecting purpose. Each antenna is fabricated of rubber compound mixed using conventional rubber mixing equipment. The rubber preferably contains a majority of natural or synthetic rubber in appropriate blends to constitute a majority of the composition. This majority may constitute from about 50% to 70% by weight of each composite antenna. Preferably, the rubber component should be between 58% and 62% by weight in the preferred embodiment.

The second most prevalent component of the composite material of each antenna should be the electrically conductive carbon black. A preferred carbon black is presently marketed by Akzo Chemie Nederland B.V., a Dutch company, and sold under the name of "Ketjen EC". The properties of this material are discussed in the September October 1977 issue of Rubber Chemistry and Technology published by the Rubber Division, American Chemical Society, Inc.

Ketjen EC has a lower bulk density, i.e., a lower weight per unit volume, than normal reinforcing carbon blacks commercially available today. It has a specific gravity of about 2.05 plus or minus about 2% as compared to normal carbon blacks which have a specific gravity of from about 1.82 to about 1.86 plus or minus about 2%.

This carbon black may constitute from above 10% to under 25% by weight of the composite antenna, preferably from 14% to 18%. The remaining chemicals and additives of the antenna material include antioxidant agents, life extenders, wear resistant materials, vulcanization promoters, processing aids and the like and constitute between 20%—30%, preferably about 24% to 26% by weight, of the antenna material.

The constituent components of the antenna material are preferably mixed in a normal fashion and calendered to the appropriate even thickness. They can then be cut to shape to fit across the belt to extend from edge to edge for carrying the electrical signals thereacross. During fabrication, the constituent portions of the belt are laid up or plied together prior to vulcanization. The electrically conductive rubber antennas are then spaced along the length of the belt above the bottom cover layer and the composite belt structure is then vulcanized in the normal fashion.

During the vulcanization process of the belt laminate, the elastomeric rubber on opposite sides of each antenna cohere with the rubber of each antenna to hold each antenna in the belt at the proper spacings. The rubber also creates an excellent bond to prevent slippage of the antenna in the belt as during operation. This non-slipping condition is desired since antenna slippage either sideways or along the linear path during operation could cause a malfunction of the detection function.

Each antenna is preferably about eight (8) to ten (10) inches in length and extends substantially full width across the belt or at least a distance extending from probe to probe and sufficient to cover the portions of the belt where ripping is likely to occur. Each antenna is normally between 0.030 and 0.060 inches thick and preferably 0.032 inches in thickness and constitutes about 10% of the total belt thickness. The probes are generally about four (4) to six (6) inches in width measured inwardly from the edge of the belt and of a length of about eight (8) to ten (10) inches, substantially equal to that of the antennas. Variations in these dimensions and ratios are acceptable.

When employed with covers of about 1/4 inch in thickness or greater, the antennas will fully be incorporated into the belt during vulcanization and the belt will assume an even thickness along its length. If, however, thinner covers are employed, as for example, covers of about 1/16 inch or less, the antennas will be fixedly positioned in the belt but, the belt will have a greater thickness at the antenna locations than at other locations. The rip detecting capabilities of a system employing such belt will not, however, be lost. Further, the greater thickness of the belt at the locations of the antennas will not normally detract from the mechanical operation of such belts.

While the instant invention is described above with regard to a preferred embodiment, it is intended to be covered broadly within the scope of the appended claims.

## Claims

1. A system for detecting a rip in a conveyor belt moveable through a closed path of travel, the conveyor belt (10) including at least one sensor probe means (24, 26) positioned along the path of travel, and the conveyor belt (10) having at least one electrically conductive antenna (28) positioned within the belt for carrying signals across the belt in a direction perpendicular to the direction of belt travel during normal operating conditions and for ceasing the carrying of signals across the belt when the belt and antenna are torn, characterized by the antenna (28) principally comprising substantially unreinforced rubber and electrically conductive particles of carbon black between more than 10% and less than 25% by weight, the antenna being vulcanized into the conveyor belt (10).

2. The system as set forth in claim 1, the electrically conductive carbon black being present in an amount of 14 to 25% by weight of the antenna.

3. The system as set forth in either claim 1 or claim 2 wherein the carbon black has a specific gravity of 2.05 plus or minus 2%.

4. The conveyor belt of any one of claims 1—3, the carbon black being "Ketjen EC"® carbon.

5. Electrically conductive means for use in a conveyor belt rip detection system as set forth in claims 1—4, said means including a substantially unreinforced blend of rubber and electrically conductive carbon black which constitutes in excess of 10% but less than 25% by weight of the blend.

## Patentansprüche

1. System zur Entdeckung eines Risses in einem Förderband, das über einen in sich geschlossenen Förderweg beweglich ist, wobei das Förderband (10) wenigstens eine Sensor-Sonde (24, 26), die längs des Förderweges angeordnet ist, umfaßt und das Förderband (10) wenigstens eine elektrisch leitfähige Antenne (28) aufweist, die im Inneren des Förderbandes angeordnet ist, um Signale quer über das Förderband in einer Richtung senkrecht zur Fortbewegungsrichtung des Förderbandes unter normalen Betriebsbedingungen zu leiten und die Leitung der Signale quer über das Förderband zu beenden, wenn Förderband und Antenne gerissen sind, dadurch gekennzeichnet, daß die Antenne (28) hauptsächlich einen im wesentlichen unverstärkten Kautschuk und elektrisch leitfähige Ruß-Teilchen in einer Menge von mehr als 10 Gew.-% bis weniger als 25 Gew.-% umfaßt und daß die Antenne in das Förderband einvulkanisiert ist.

2. System nach Anspruch 1, dadurch gekennzeichnet, daß der elektrisch leitfähige Ruß in einer Menge von 14 bis 25 Gew.-% vorliegt.

3. System nach Anspruch 1 oder Anspruch 2, dadurch gekennzeichnet, daß der Ruß ein spezifisches Gewicht von 2,05 zu- oder abzüglich 2% besitzt.

4. Förderband nach irgendeinem der Ansprüche 1 bis 3, dadurch gekennzeichnet, daß der Ruß "Ketjen EC"® -Kohlenstoff ist.

5. Elektrische leitfähiges Mittel zur Verwendung in einem System zur Entdeckung eines Risses in einem Förderband nach den Ansprüchen 1 bis 4, dadurch gekennzeichnet, daß das Mittel ein im wesentlichen unverstärktes Gemisch aus Kautschuk und elektrisch leitfähigen Ruß, der mehr als 10 Gew.-%, jedoch weniger als 25 Gew.-% des Gemischs bildet, umfaßt.

**Revendications**

1. Système détecteur de fissure dans une bande transporteuse se déplaçant sur une trajectoire fermée, la bande transporteuse (10) comprenant au moins une sonde détectrice (24, 26) placée le long de la trajectoire, et la bande transporteuse (10) possédant au moins une antenne électroconductrice (28) placée à l'intérieur de la bande pour transmettre des signaux en travers de la bande dans une direction perpendiculaire au sens de translation de la bande dans les conditions normales de marche et pour interrompre la transmission des signaux en travers de la bande quand la bande et l'antenne sont déchirées, caractérisé en ce que l'antenne (28) est principalement constituée de caoutchouc essentiellement non-armé et de particules électroconductrices de noir de carbone, entre plus de 10 et moins de 25 % en poids, l'antenne étant vulcanisée dans la bande transporteuse (10).

2. Système selon la revendication 1, le noir, de carbone électroconducteur étant présent en une quantité de 14 à 25 % en poids par rapport à l'antenne.

3. Système selon la revendication 1 ou la revendication 2, dans lequel le noir de carbone a une densité de 2,05 ± 2 %.

4. Bande transporteuse selon l'une quelconque des revendications 1 à 3, le noir de carbone étant le carbone "Ketjen EC"®.

5. Moyen électroconducteur, pour utilisation dans un système détecteur de fissures d'une bande transporteuse selon les revendications 1 à 4, ledit moyen comprenant un mélange pratiquement non-armé de caoutchouc et de noir de carbone électroconducteur, lequel compte pour plus de 10 % mais moins de 25 % en poids du mélange.

0 082 476

FIG. 1

FIG. 2

FIG. 3

FIG. 4

1